Europäisches Patentamt

European Patent Office

Office européen des brevets

(11) Veröffentlichungsnummer: **0 095 620**
**B1**

# (12) EUROPÄISCHE PATENTSCHRIFT

(45) Veröffentlichungstag der Patentschrift:
24.09.86

(21) Anmeldenummer: 83104670.1

(22) Anmeldetag: 11.05.83

(51) Int. Cl.⁴: **B 22 D 39/00,** G 05 D 7/06,
**H 02 K 44/06**

(54) **Verfahren und Vorrichtung zur Regelung der Förderleistung einer induktiven Flüssigmetallförderpumpe.**

(30) Priorität: 27.05.82 DE 3220069

(43) Veröffentlichungstag der Anmeldung:
07.12.83 Patentblatt 83/49

(45) Bekanntmachung des Hinweises auf die Patenterteilung:
24.09.86 Patentblatt 86/39

(84) Benannte Vertragsstaaten:
AT BE CH DE FR GB IT LI LU NL SE

(56) Entgegenhaltungen:
GB-A-1 441 826
LU-A-72 516
US-A-3 279 001
US-A-4 210 192

ELEKTRIE, Band 27, Nr. 12, Dezember 1973, Seiten
651-653, Berlin, DE. AUTORENKOLLEKTIV: "MHD-
Antrieb zur Förderung von Magnesium in einer
Giesserei"
PATENTS ABSTRACTS OF JAPAN, Band 2, Nr. 119,
4. Oktober 1978, Seite 3739M78
PATENTS ABSTRACTS OF JAPAN, Band 2, Nr. 69,
25. Mai 1978, Seite 1432M78
SIEMENS-ZEITSCHRIFT, Band 49, Nr. 5, 1975, Seiten
321-324, Erlangen, DE. R. HANS: "Neuartige
Natriumdurchflussmesseinrichtung für
Brennelemente in Kernkraftwerken"

(73) Patentinhaber: **INTERATOM Gesellschaft mit
beschränkter Haftung, Friedrich- Ebert- Strasse,
D-5060 Bergisch Gladbach 1 (DE)**

(72) Erfinder: **Hans, Rainer, Dipl.- Ing., An der
Wolfsmaar 6, D-5060 Bergisch- Gladbach 3 (DE)**

(74) Vertreter: **Mehl, Ernst, Dipl.- Ing., Postfach 22 01
76, D-8000 München 22 (DE)**

## Beschreibung

Die vorliegende Erfindung betrifft ein Verfahren nach dem Oberbegriff des ersten Anspruches und eine Vorrichtung nach dem Oberbegriff des Anspruch 2. Eine häufig auftretende Aufgabenstellung in Gießereien und Ähnlichen Betrieben ist das Fördern von Flüssigmetall aus einem Vorratsbehälter, wobei dies entweder über den oberen Rand des Behälters oder aber aus einer am unteren Ende des Behälters liegenden Öffnung erfolgen kann. Zu diesem Zweck ist es bereits bekannt, induktive Förderpumpen zu verwenden. Die Regelung der Förderleistung erfolgt normalerweise über eine Regelung der Ströme in den Induktionsspulen, so daß keine zusätzlichen mechanischen Vorrichtungen nötig sind. Da die Förderleistung andererseits aber auch von der Füllstandshöhe des Flüssigmetalls im Vorratsbehälter abhängt, wird üblicherweise die Füllstandshöhe und außerdem auch die Temperatur der Schmelze gemessen und die Förderleistung entsprechend korrigiert. Ein geeigneter Füllstandsmesser wird beispielsweise in der DE-A- 22 10 297 beschrieben.

Die immer höheren Anforderungen an die Genauigkeit, insbesondere beim Portionieren von Flüssigmetall auf Gießformen, erfordern jedoch eine präzisere Regelung der Förderpumpen. Da die großen Vorratsbehälter bei der Entnahme von geringen Mengen Flüssigmetall kaum eine Füllstandsänderung zeigen, ist ein Portionieren mit dieser Information allein praktisch nicht möglich. Wenn insbesondere die Forderung nach Automatisierung und einer auf einige Gramm genauen Portionierung, beispielsweise von flüssigem Aluminium beim Gießen von kleinen Bauteilen, gestellt wird, so macht dies ein neues Konzept der Regelung nötig.

Aus der Zeitschrift "Elektrie", 1973, Band 27, H12, Seiten 651 bis 653, ist zwar schon bekannt, die Förderleistung einer Pumpe mittels eines selbsttätigen Antriebsregelkreises, der einen Durchflußmesser umfaßt, zu regeln, um die Regelgenauigkeit der Fördermenge zu erhöhen, jedoch sind die speziellen Probleme der präzisen portionierenden Entnahme nicht angesprochen und auch nicht gelöst.

In der US-A-3 279 001, von der die vorliegende Erfindung ausgeht, sind die prinzipiellen Schwierigkeiten bei der portionierenden Entnahme von Flüssigmetall allerdings angesprochen. Insbesondere wird das Problem behandelt, wie während Förderpausen ein bestimmter Füllstand im Zustellrohr eingehalten werden kann. Die dort beschriebene Anordnung ist jedoch für eine präzise Portionierung noch nicht geeignet. Das liegt einerseits daran, daß die entnommene Menge an Flüssigmetall durch Wägung des gesamten Schmelzenbehälters bestimmt wird, was naturgemäß bei kleinen Portionen nicht sehr genau sein kann, und andererseits daran, daß für die Füllstandsmessung im Zustellrohr während der Förderpausen eine aufwendige Messung mit radioaktiven Strahlen durchgeführt wird, welche neben anderen Problemen vor allem die Beweglichkeit des Zustellrohres beeinträchtigt.

Aufgabe der vorliegenden Erfindung ist daher ein Verfahren und eine Vorrichtung zur präzisen Regelung der Förderleistung einer induktiven Flüssigmetallförderpumpe bei der kontinuierlichen, insbesondere auch bei der portionierenden Entnahme von Flüssigmetall aus einem Vorratsbehälter.

Berücksichtigt werden soll insbesondere, daß eine größtmögliche Automatisierung und einfache Bedienung sowie einfacher Aufbau gewährleistet sind.

Diese Aufgabe wird durch die kennzeichnenden Merkmale des Hauptanspruchs gelöst. Durch diese Merkmale werden mehrere Vorteile erreicht. Zunächst wird die Genauigkeit der Fördermengenmessung erheblich gesteigert, da die Durchflußmessung wesentlich genauer als die Wägung oder Messung der Füllstandsdifferenz ist. Mit Hilfe des Durchflußmessers kann außerdem durch Integrieren eine bestimmte vorwählbare Portion abgefüllt werden. Beim Portionieren trat bisher ein weiteres, nur durch die oben beschriebene aufwendige Technik vermeidbares Problem auf, nämlich das während den Förderpausen das Flüssigmetall nicht ganz exakt stillstand. So tropfte es entweder aus dem Zustellrohr, oder der Flüssigmetallspiegel sank in diesem etwas ab. Ersteres ist unerwünscht, das zweite führt zu Fehlmessungen bei der nächsten Portionierung, da der Inhalt des Zustellrohres schon einige Gramm ausmacht. Auch mit Hilfe eines Durchflußmessers kann diese Übel allein nicht abgestellt werden, da sehr langsame Bewegungen des Flüssigmetalls im Durchflußmesser unterhalb der Nachweisgrenze liegen können. Hier schafft nun der vorgeschlagene Flüssigmetallfühler am Ende des Zustellrohres in einfacher Weise Abhilfe. In Förderpausen steuert die Regeleinrichtung mit Hilfe seiner Information die Förderleistung so ein, daß das Flüssigmetall immer genau bis zu diesem Fühler steht. Beim Fördern der nächsten Portion ist dann gewährleistet, daß nicht zuerst Gas gefördert wird.

Eine zur Durchführung des Verfahrens geeignete Vorrichtung wird im Anspruch 2 vorgeschlagen. Dazu werden am Zustellrohr einer Flüssigmetallförderpumpe ein Durchflußmesser und ein Flüssigmetallfühler angeordnet. Weiterhin ist eine Regelschaltung zur Regelung der Ströme in den Induktionsspulen der Pumpe vorhanden, mit welcher Durchflußmesser und Flüssigmetallfühler verbunden sind. Diese Instrumentierung eröffnet weitgehende Möglichkeiten zur präzisen und automatischen Regelung von Flüssigmetallförderpumpen.

Gemäß Anspruch 3 können der Durchflußmesser und/oder Füllstandsfühler aus Induktionsspulen aufgebaut sein, was zu einer kompakten und unempfindlichen Bauweise und präzisen Messung führt.

Im Anspruch 4 wird eine mögliche Ausführung des Durchflußmessers vorgeschlagen, wie sie im Prinzip aus der DE-A-21 20 523 bekannt ist. Dazu werden um das Zustellrohr drei Induktionsspulen angeordnet, deren gegenseitige Induktion ein Maß für den Volumenstrom im Zustellrohr ist. Da die Messung mit drei solchen Induktionsspulen im Prinzip eine Differenzmessung ist, kann der Volumenstrom sehr genau ermittelt werden.

Im Anspruch 5 wird entsprechend vorgeschlagen, den Flüssigmetallfühler aus zwei Induktionsspulen aufzubauen, deren gegenseitige Induktion beim Vorhandensein von Flüssigmetall im Inneren des Zustellrohres sehr gering, in Abwesenheit von Flüssigmetall jedoch hoch ist. Ein solcher Flüssigmetallfühler ist in engen Grenzen ein Füllstandsmesser, so daß mit Hilfe seines Signals eine präzise Regelung möglich ist. Beim Ansteigen der gegenseitigen Induktion der Spulen muß dann die Förderleistung der Pumpen ebenfalls erhöht werden, während beim Absinken der Induktion die Förderleistung ebenfalls reduziert werden muß. Dieser Fühler ermöglicht daher eine zuverlässige Definition des Flüssigmetallstandes im Zustellrohr.

Zur Erläuterung sei eine mögliche Ausführungsform der Regelschaltung genauer beschrieben. Dabei weist die Regelschaltung Analog-Digitalwandler auf, die die Meßwerte von Durchflußmesser und Flüssigmetallfühler sowie ggf. Temperaturfühler und Füllstandsmesser digitalisieren. Fernerhin weist die Regelschaltung eine Recheneinheit auf, in der die digitalisierten Meßwerte weiter verarbeitet werden können. Zusätzlich sind Wahlschalter und Speicher vorhanden, mit denen gewünschte kontinuierliche Durchflußmengen bzw. Portionen eingestellt und gespeichert werden können. Die Regelschaltung weist zusätzlich einen Vergleicher auf, welcher eingestellte (bzw. gespeicherte) Sollwerte und Meßwerte vergleicht. Mit Hilfe einer Mehrphasenstromregeleinrichtung, welche mit dem Ergebnis des Soll-/Ist-Wert-Vergleiches ansteuerbar ist, werden dann die Ströme in den Induktionsspulen der Flüssigmetallpumpe eingestellt. Die so beschriebene Regelschaltung arbeitet weitgehend automatisch. Nach Einstellen der gewünschten Sollwerte sind keine weiteren manuellen Maßnahmen mehr nötig. Lediglich ein- und ausschalten genügt.

Ein Ausführungsbeispiel der Erfindung ist in der Zeichnung dargestellt, und zwar zeigen

Figur 1 schematisch die Einbindung einer Flüssigmetallförderpumpe in das ganze Meß- und Regelsystem und

Figur 2 die spezielle Anordnung von Durchflußmesser und Flüssigmetallfühler bei einer Aluminiumtauchpumpe.

Die in der Zeichnung gezeigte Darstellung ist lediglich ein mögliches Ausführungsbeispiel für die erfindungsgemäße Regelung, welche sich am Beispiel der Tauchpumpe am deutlichsten zeigen läßt. Das Regelsystem eignet sich natürlich auch für Pumpen, die an einem unteren Auslaß eines Vorratsbehälters angeordnet sind und zum beschleunigten Fördern oder Bremsen des Flüssigmetallstromes eingesetzt werden. Auch bei solchen Anordnungen ist häufig eine Regelung zur präzisen Portionierung möglich.

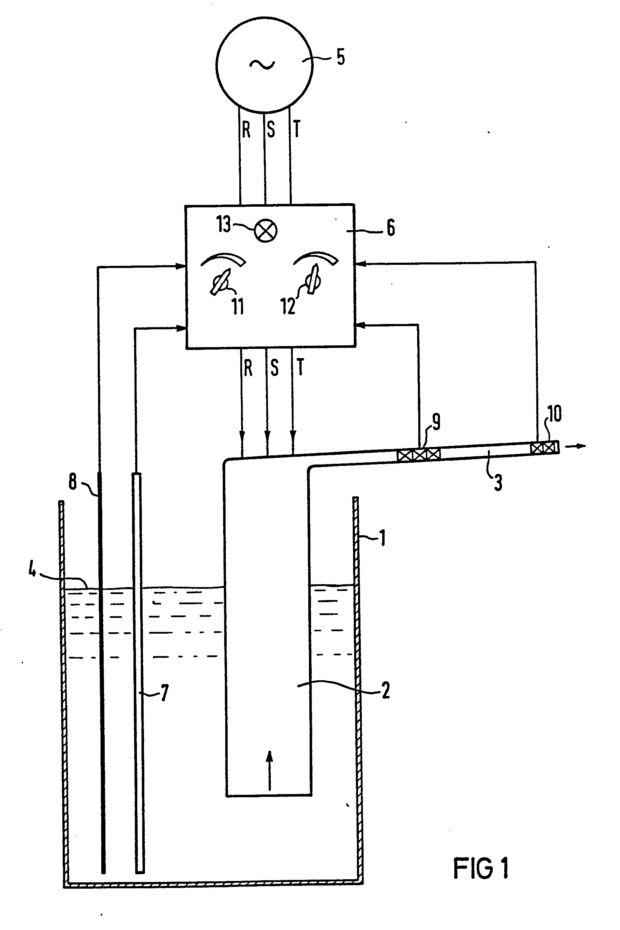

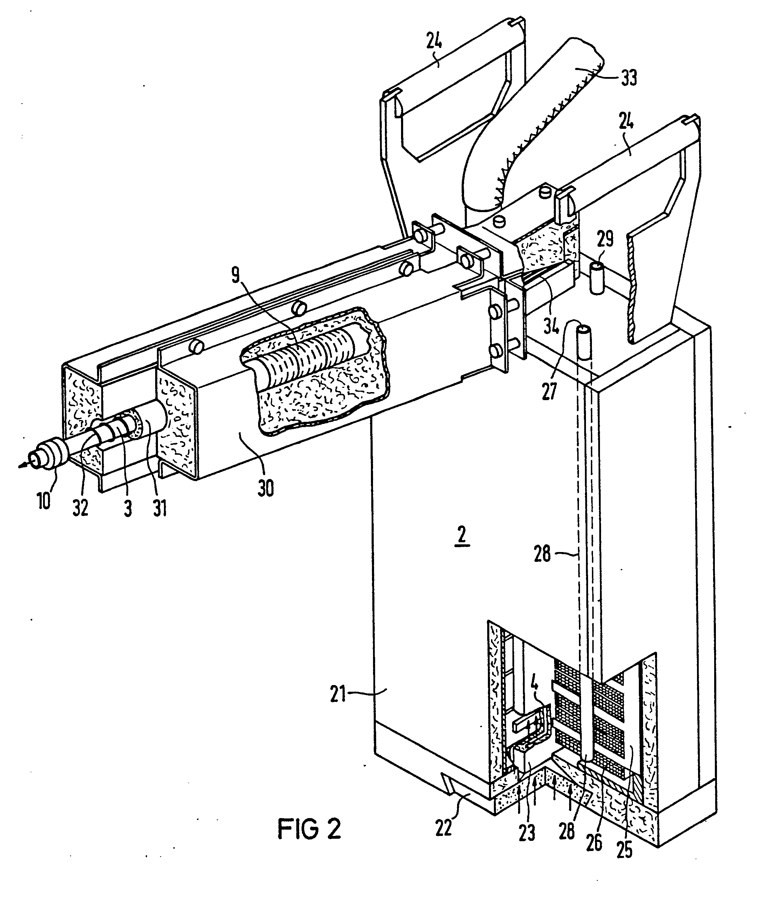

Hier in Figur 1 jedoch ist das Regelsystem schematisch anhand einer Aluminiumtauchpumpe dargestellt, welche in Figur 2 nochmals im Detail gezeigt wird. In einem Vorratsbehälter 1 ist eine Tauchpumpe 2 in die Schmelze getaucht. Diese Tauchpumpe 2 fördert Flüssigmetall durch ein Zustellrohr 3 zu dem vorgesehenen Gießort. Dabei kann dieser sehr wohl oberhalb des Flüssigmetallspiegels 4 liegen. Die Induktionsspulen der Flüssigmetallpumpe werden aus einer Mehrphasenstromquelle 5 unter Zwischenschaltung einer Regelschaltung 6 angesteuert. Üblicherweise werden solche Pumpen mit 3-Phasen-Wechselstrom (R,S,T) betrieben. Da die Förderleistung vom Füllstand und der Temperatur der Schmelze abhängt, sind ein Füllstandsmesser 7 und ein Temperaturfühler 8 in die Schmelze getaucht. Ihre Meßwerte werden an die Regelschaltung 6 weitergegeben. Zusätzlich ist am Zustellrohr 3 ein Durchflußmesser 8 angeordnet, welcher vorzugsweise aus 3 Induktionsspulen besteht. Der Meßwert dieses Durchflußmessers 9 wird ebenfalls der Regelschaltung 6 zugeleitet. Am Ende des Zustellrohres 3 befindet sich noch ein Flüssigmetallfühler 10, welcher vorzugsweise aus 2 Induktionsspulen besteht. Auch sein Meßwert wird der Regelschaltung 6 zugeleitet. Die Regelschaltung 6 ist fernerhin mit 2 Wahlschaltern 11, 12 verbunden, mit welchen die Sollwerte für gewünschte Durchflußmenge oder Portion eingestellt werden können. Außerdem ist die Regelschaltung mit einer Warneinrichtung 13 versehen, beispielsweise einer Lampe, welche Störungen anzeigen kann.

In Figur 2 ist ein spezielles Ausführungsbeispiel für die Anordnung der zusätzlichen Instrumente an einer Aluminiumtauchpumpe 2 dargestellt. Die Tauchpumpe 2, bestehend aus Gehäuse 21, keramischer Filterplatte 22, einem rechteckigen Förderkanal 23, und um diesen herum angeordneten Magneten und Spulen 25 bzw. 26 kann an Griffen (24) in einen Flüssigmetallvorratsbehälter hinabgelassen werden. Fernerhin sind Zuleitungen 27 und Ableitungen 29 für ein Kühl- bzw. Inertgas vorgesehen. Über ein Tauchrohr 28 wird das Inertgas in das Gehäuse der Pumpe geleitet. Die elektrischen Zuleitungen für die Magnetspulen 26 werden durch ein Schutzrohr 33 zugeführt. Über ein Winkelstück 34 ist der Pumpkanal 23 an ein Zustellrohr 3 angeschlossen. Das Zustellrohr 3 ist mit Isoliermitteln 31,30 umgeben und zusätzlich mit einer Heizwicklung 32 versehen. Unter der Isolierung ist auf das Zustellrohr 3 ein Durchflußmesser 9 aufgebracht, welcher aus 3 Induktionsspulen besteht. Ganz am Ende des Zustellrohres 3 ist ein Flüssigmetallfühler 10 angeordnet, welcher aus 2 Induktionsspulen besteht.

Die vorgeschlagene Flüssigmetallförderpumpe in Verbindung mit dem Regelsystem eignet sich insbesondere für die Entnahme von genau definierten kleinen Portionen Flüssigmetall.

**Patentansprüche**

1. Verfahren zur Regelung der Förderleistung einer induktiven Flüssigmetallförderpumpe (2) bei der intervallweisen, portionierenden Entnahme von Flüssigmetall aus einem Vorratsbehälter (1) mittels eines Zustellrohres (3), wobei eine Regelschaltung (6) aus verschiedenen Meßwerten die in den Induktionsspulen (26) der induktiven Flüssigmetallförderpumpe (2) benötigten Stromstärken bestimmt und wobei in den Förderpausen durch Regelung mittels einer Füllstandsmessung die Förderleistung gerade so hoch gehalten wird, daß sich ein bestimmter Pegel des Flüssigmetalls im Zustellrohr (3) einstellt,
dadurch gekennzeichnet,
daß während der Förderungszeiten die Fördermenge Flüssigmetall pro Zeiteinheit mit einem Durchflußmesser (9) gemessen und durch Integrieren über die Zeit die Gesamtfördermenge bestimmt wird, wobei bei Erreichen einer gewünschten, vorwählbaren Gesamtfördermenge die Förderung beendet wird und die Füllstandsmessung in den Förderpausen mittels eines an oder in dem Zustellrohr (3) integrierten Füllstandsfühlers (10) erfolgt.

2. Vorrichtung zur Regelung der Förderleistung einer induktiven Flüssigmetallförderpumpe (2) bei der intervallweisen, proportionierenden Entnahme von Flüssigmetall aus einem Vorratsbehälter (1) mittels eines Zustellrohres (3), wobei die Vorrichtung eine Regelschaltung (6) aufweist, die aus verschiedenen Meßwerten die in den Induktionsspulen (26) der induktiven Flüssigmetallförderpumpe (2) benötigten Stromstärken bestimmt, und die ferner eine Füllstandsmeßvorrichtung aufweist, welche in den Förderpausen die Messung des Flüssigmetallpegels im Zustellrohr (3) ermöglicht,
dadurch gekennzeichnet,
daß am Zustellrohr (3) ein Durchflußmesser (9) und ein Füllstandsfühler (10) angeordnet sind, welche mit der Regelschaltung (6) verbunden sind.

3. Vorrichtung nach Anspruch 2,
dadurch gekennzeichnet,
daß der Durchflußmesser (9) und/oder der Füllstandsfühler (10) aus Induktionsspulen aufgebaut sind, deren gegenseitige Induktion ein Maß für den Volumenstrom bzw. den Pegelstand des Flüssigmetalls im Zustellrohr (3) ist.

4. Vorrichtung nach Anspruch 3,
dadurch gekennzeichnet,
daß der Durchflußmesser (9) aus drei Induktionsspulen besteht.

5. Vorrichtung nach Anspruch 3,
dadurch gekennzeichnet,
daß der Flüssigmetallfühler (10) aus zwei Induktionsspulen besteht, deren gegenseitige Induktion beim Vorhandensein von Flüssigmetall im Inneren des Zustellrohres (3) sehr gering, in Abwesenheit von Flüssigmetall jedoch hoch ist.

**Claims**

1. A method for regulating the delivery capacity of an inductive delivery pump for liquid metals (2) during the proportioning removal of liquid metal in intervals from a supply container (1) by means of a feed pipe (3), wherein a regulating circuit (6) determines the current intensities required in the induction coils (26) from different measured values, and wherein during the delivery pauses the delivery capacity is just retained by regulation with the aid of a filling level measurement, to such an extent that a specific level of the liquid metal is adjusted in the feed pipe (3), characterised in that during the delivery times the delivery quantity of liquid metal is measured per unit time by a flowmeter (9) and the overall delivery quantity is determined by integration over the time, where when a required, preselectable overall delivery quantity has been obtained the delivery is terminated, and the filling level measurement is carried out during the delivery pauses by means of a filling level sensor (10) integrated on or in the feed pipe (3).

2. A device for regulating the delivery capacity of an inductive delivery pump for liquid metals (2) during the proportioning removal of liquid metals in intervals from a supply container (1) by means of a feed pipe (3), where the device possesses a regulating circuit (6) which determines from different measured values, the current intensities required in the induction coils (26) of the inductive delivery pump (2) for liquid metals, and which further possesses a measuring device for the filling level, which device allows the measurement of the liquid metal level in the feed pipe (3) during the delivery pauses, characterised in that a flowmeter (9) and a filling level sensor (10) connected to the regulating circuit (6) are arranged on the feed pipe (3).

3. A device as claimed in Claim 2, characterised in that the flowmeter (9) and/or the filling level sensor (10) consist of induction coils, whose mutual induction is a measure for the current volume and the level of the liquid metal in the feed pipe (3).

4. A device as claimed in Claim 3, characterised in that the flowmeter (9) consists of three induction coils.

5. A device as claimed in Claim 3, characterised in that the liquid metal sensor (10) consists of three induction coils, whose mutual induction is very low when liquid metal is present inside the feed pipe (3), but high when liquid metal is absent.

## Revendications

1. Procédé pour réguler la capacité de refoulement d'une pompe (2) à induction, destinée à véhiculer du métal liquide, quand on prélève, par intervalle de temps et en formant des portions, du métal liquide d'un réservoir (1) au moyen d'un tuyau de prélèvement (3), un circuit de régulation (6) déterminant, à partir de diverses valeurs de mesure, les intensités du courant électrique nécessaires dans les bobines d'induction (26) de la pompe (2) à induction pour la mise en circulation de métal liquide et la capacité de refoulement pendant les intervalles entre les refoulements étant maintenue, par régulation au moyen d'une mesure du niveau de remplissage, exactement à la valeur pour laquelle il s'établit un niveau déterminé du métal liquide dans le tuyau de prélèvement (3), caractérisé en ce qu'il consiste à mesurer, pendant les tempe de refoulement, la quantité de métal liquide refoulée par unité de temps avec un débitmêtre (9) et à déterminer la quantité totale refoulée, par intégration en fonction du temps, le refoulement étant interrompu lorsqu'une quantité totale refoulée sélectionnée, pouvant être choisie à l'avance, est atteinte et la mesure du niveau de remplissage pendant les intervalles de temps entre les refoulements s'effectuant au moyen d'un détecteur de niveau de remplissage (10) appliqué sur le tuyau de prélévement (3) ou incorporé à celuici.

2. Dispositif pour réguler la capacite de refoulement d'une pompe (2) à induction, destinée à véhiculer du métal liquide, quand on prélève, par intervalle de temps et en formant des portions, du métal liquide d'un réservoir (1), au moyen d'un tuyau de prélèvement (3), le dispositif comprenant un montage de régulation (6) qui détermine, à partir de diverses valeurs de mesure, les intensités de courant nécessaires dans les bobines d'induction (26) de la pompe (2) à induction pour le métal liquide, et qui comporte, en outre, un dispositif de mesure du niveau de remplissage qui permet de mesurer, pendant les intervalles de temps entre les refoulements, le niveau du métal liquide dans le tuyau de prélèvement (3), caractérisé en ce que, sur le tuyau de prélèvement (3) sont montés un débitmètre (9) et un détecteur de niveau de remplissage (10) qui sont reliés au montage de régulation (6).

3. Dispositif suivant la revendication 2, caractérisé en ce que le débitmètre (9) et/ou le détecteur du niveau de remplissage (10) sont constitués de bobines d'induction, dont l'induction mutuelle représente une mesure du courant en volume ou du niveau du métal liquide dans le tuyau de prélèvement (3).

4. Dispositif suivant la revendication 3, caractérisé en ce que le débitmètre (9) est constitué de trois bobines d'induction.

5. Dispositif suivant la revendication 3, caractérisé en ce que le détecteur du métal liquide (10) est constitué de deux bobines d'induction, dont l'induction mutuelle est trés faible lorsque du métal liquide est présent à l'intérieur du tuyau de prélèvement (3), mais est élevée en cas d'absence de métal liquide.

FIG 1

FIG 2